# EUROPEAN PATENT SPECIFICATION

(11) **EP 4 244 746 B1**
(45) Date of publication and mention of the grant of the patent: **12.08.2026**
(21) Application number: 21810003.0
(22) Date of filing: 09.11.2021
(51) Int. Cl.: G06F 21/55, H04L 9/40, G06F 21/71, G06F 21/72, G06F 21/75

(54) **METHOD FOR DETECTING AN ATTACK ON A SENSITIVE UNIT OF AN ELECTRONIC SYSTEM**
VERFAHREN ZUR DETEKTION EINES ANGRIFFS AUF EINE EMPFINDLICHE EINHEIT EINES ELEKTRONISCHEN SYSTEMS
PROCÉDÉ DE DÉTECTION D'UNE ATTAQUE SUR UNE UNITÉ SENSIBLE D'UN SYSTÈME ÉLECTRONIQUE

(30) Priority: 10.11.2020 EP 20306355
(43) Date of publication of application: 20.09.2023
(73) Proprietor: THALES DIS FRANCE SAS, 92190 Meudon (FR)
(72) Inventor: LOUBET MOUNDI, Philippe, 92190 Meudon (FR); GRAVELLIER, Joseph, 92190 Meudon (FR); TEGLIA, Yannick, 92190 Meudon (FR)
(74) Representative: Bricks, Amélie
(86) International application number: PCT/EP2021/081154
(87) International publication number: WO 2022/101223

(56) References cited:
- EP-A1- 3 672 140
- WO-A1-2015/114944
- US-A1- 2015 373 035
- US-A1- 2018 316 489
- US-B1- 8 892 903

## Description

### FIELD OF THE INVENTION

The present invention relates to the field of chip protection against attacks, and more particularly to a method and a corresponding device able to preserve its ability to take countermeasure in case of attacks.

### BACKGROUND OF THE INVENTION

In order to protect an electronic system against attacks such as fault injection attacks or logical attacks, attack detection systems monitoring the behavior of the electronic device have been implemented in electronic systems to be protected. In order to prevent an attack from being successful, such an attack detection system is often connected to another system in charge of triggering countermeasures in case of detection of an attack.

Therefore, in order to prevent the triggering of such countermeasures, attackers have designed attacks in which the communication between the attack detection system and countermeasure triggering system is broken, for example by manually cutting off the wires between the two systems. In such a case, even if the attack on the electronic system is detected, it doesn't lead to any action by the electronic system and the attack is successful.

Such attacks have been countered by adding to the electronic system to be protected redundant wires or redundant detection systems. Alternative solutions have been designed in which shields were added to the electronic system in order to prevent any attack on the communication link between the detection system and the countermeasure triggering system. Other solutions have been proposed in which a wireless communication link is setup between the two systems. Nevertheless, such solutions all have the drawback of adding dedicated components to the electronic system and therefore increasing its cost.

Therefore, there is a need for an electronic system including a protection against attacks, and protected against attacks on the communication link between its attack detection system and its countermeasure triggering system, at a lower cost than existing solutions protected against such attacks.

### SUMMARY OF THE INVENTION

For this purpose and according to a first aspect, this invention therefore relates to a method for detecting an attack on a sensitive unit of an electronic system comprising an attack detection system, a sensor and a decision center, said method comprising:
- detecting, by said attack detection system, an attack on said sensitive unit,
- performing, by said attack detection system, an action depending on a result of said detection, said action inducing a leakage having an impact on said sensor;
- generating, by said sensor, a signal, said signal generation being perturbed by said leakage induced by the attack detection system,
- accessing, by said decision center, said signal generated by said sensor,
- determining, by said decision center, by a side channel analysis based on said accessed signal that said attack detection system has detected an attack on said sensitive unit.

Such a method enables to set up a hidden communication channel between the attack detection system and the decision center. It enables the decision center to retrieve information about attack detection by the attack detection system without any direct connection between them.

In an embodiment of the method according to the first aspect:
- said electronic system comprises a power supply providing power to said attack detection system and said sensor,
- said leakage is a variation in a voltage provided by said power supply to said sensor,
- said signal generation depends on said voltage variation induced by the attack detection system.

It enables to transmit the attack detection information from the attack detection system up to the decision center under the form of voltage variations

In this embodiment:
- detecting an attack may comprise: collecting an information,
- performing an action depending on a detection result may comprise: performing a computational process based on a function and on said collected information,
- generating a signal may comprise: generating a signal representative of the power consumed by the attack detection system when performing said computational process,
- determining that said attack detection system has detected an attack may comprise: retrieving said information based on said generated signal.

By doing so, the information collected by the attack detection system is hidden in its power consumption which is amplified by performing a computational process such that it generates enough voltage variations at the sensor to enable the decision center to retrieve the collected information by a side channel analysis.

The function may be a cryptographic algorithm and the information may be used as a part of the key of the cryptographic algorithm.

Said information may be the value of an alarm.

The method according to the first aspect may comprise: performing, by said decision center, a dedicated action when said attack detection is determined by said decision center.

According to a second aspect, this invention relates to a computer program product directly loadable into the memory of at least one computer, comprising software code instructions for performing the steps of the method according to the first aspect of the invention when said product is run on the computer.

According to a third aspect, this invention relates to an electronic system comprising a sensitive unit, an attack detection system, a sensor and a decision center wherein:
- said attack detection system is configured for detecting an attack on said sensitive unit,
- said attack detection system is configured for performing an action depending on a result of said detection, said action inducing a leakage having an impact on said sensor;
- said sensor is configured for generating a signal, said signal generation being perturbed by said leakage induced by the attack detection system,
- said decision center is configured for accessing said signal generated by said sensor,
- said decision center is configured for determining by a side channel analysis based on said accessed signal that said attack detection system has detected an attack on said sensitive unit.

The sensitive unit of the electronic system according to the third aspect may comprise said attack detection system.

The electronic system according to the third aspect may be configured for detecting an attack by performing the method according to the first aspect.

Said sensor may comprise a delay locked loop or a phase locked loop or a time to digital converter or a ring oscillator.

Said attack detection system may comprise a voltage glitch detector or a laser detector or an electromagnetic sensor or a temperature sensor.

The electronic system may be a System-on-Chip.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 is a schematic illustration of an electronic system comprising a sensitive unit according to the present invention;
- Figures 2 is a schematic illustration of an electronic system according to the present invention;
- Figures 3 is a schematic illustration of an electronic system according to an embodiment of the present invention;
- Figure 4 is a schematic illustration of a method for detecting an attack on a sensitive unit of an electronic system according to an embodiment of the present invention;
- Figure 5 is a schematic illustration of an electronic system configured for detecting an attack by performing the method for detecting an attack according to an embodiment of the present invention.

### DETAILED DESCRIPTION OF EMBODIMENTS OF THE INVENTION

According to a first aspect, the invention relates to method for detecting an attack on a sensitive unit of an electronic system.

Such an electronic system 1 may for example be a System-on-Chip (SoC). Alternatively, it may be a computer system housing multiple electronic parts such as a PC or a server.

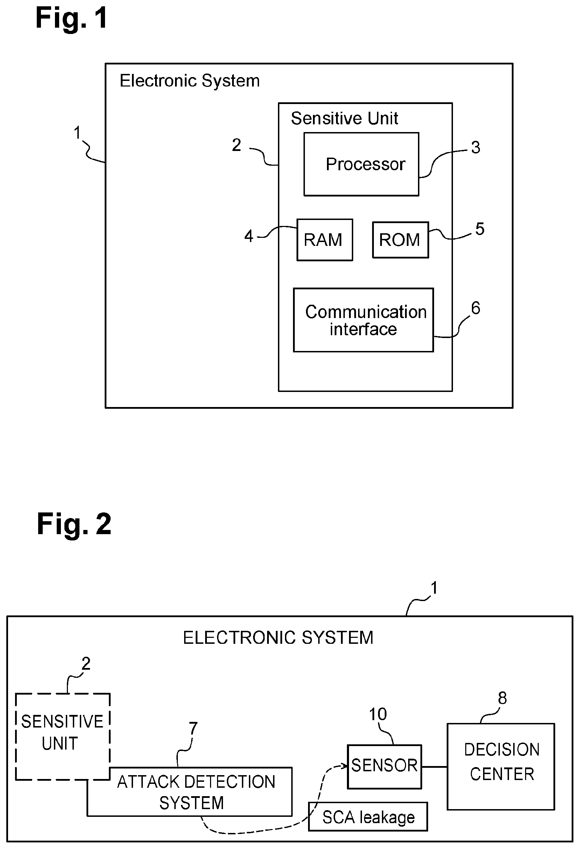

As described on **Figure 1****,** such an electronic system 1 includes a sensitive unit 2, to be protected against attacks.

Such a sensitive unit may for example comprise a processor 3, a random access memory (RAM) 4, a read-only memory (ROM) 5 and a communication interface 6. Such a communication interface may be used to connect the sensitive unit to various forms of wireless networks, e.g., wide-area networks, WiFi networks, or mobile telephony networks. Alternatively, the sensitive unit may connect to networks via wired network connections such as Ethernet.

Such a sensitive unit may handle secret data to be protected such as cryptographic keys, banking information, or biometric data. As a result, attackers may perform attacks against it, such as focus Ion Beam attacks or fault attacks including laser attacks, EMFI, FBBI, power glitch, clock glitch, in order to retrieve the secret data handled or stored by the sensitive unit.

As shown on **Figure 2****,** in order to protect the sensitive unit and its data against such attacks, the electronic system 1 comprises an attack detection system 7 monitoring the behavior or the state of the sensitive unit, in order to detect any attack targeting it. Such an attack detection system may for example be a voltage glitch detector, an electromagnetic detector, a temperature detector or a laser detector. It may also be a unit checking code integrity by running an error detection and correction code. Such an attack detection system 7 may be included in the sensitive unit itself or it may be a separate component of the electronic system.

The electronic system further includes a decision center 8, configured to take dedicated actions, such as activating countermeasures or shutting down the electronic system, when an attack on the sensitive unit is detected by the attack detection system.

As described above, the purpose of the invention is to maintain a communication link between the attack detection system 7 and the decision center 8 despite attacks aiming at making the decision center blind, for example by cutting off communication wires between the attack detection system and the decision center. In order to do so, the main idea of the invention is to make the attack detection system 7 and the decision center 8 communicate by making the attack detection system generate a leakage depending on the result of its attack detection activity, and to make the decision center aware of this result by performing side-channel-analysis on the leakage generated by the attack detection system.

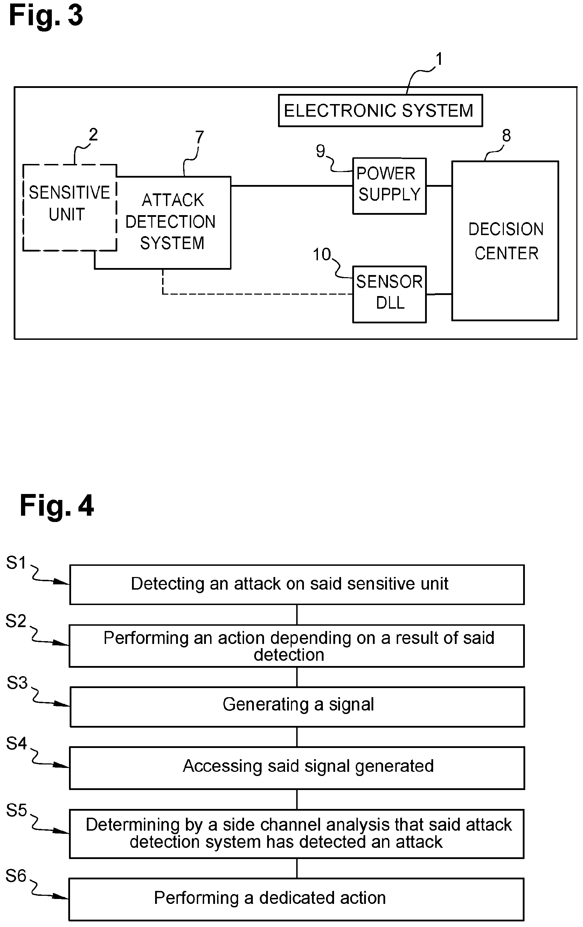

For example, such a leakage may be a power leakage. In such a case, as shown on **Figure 3****,** the electronic system may include a power supply 9 providing power to the components of the electronic system, including the attack detection system 7, and the attack detection system's activity may generate variations of a voltage delivered by the power supply to the other components of the electronic system. In such a case, monitoring variations of the voltage delivered by the power supply may enable the decision center 8 to perform a side-channel analysis and get knowledge of an attack detection by the attack detection system.

In order to collect the leakage, and make it available to the decision center 8, the electronic system 1 comprises a unit whose behavior is impacted by the leakage, and which is connected to the decision center, so that the decision center may read the leakage through this unit and perform its side-channel analysis. Such a unit, sensitive to the leakage generated by the attack detection system, is called a sensor 10 in the following paragraphs.

In the case of a power leakage, such a sensor 10 may for example be a Time To Digital Converter (TDC). The attack detection system's activity may generate variations of a voltage delivered by the power supply to the TDC. Such voltage variations induce propagation delay variations in the TDC, which result in variations of the digital output of the TDC. Similarly, such a sensor 10 may be a Delay Locked Loop (DLL), a Phase Locked Loop (PLL) or a Ring Oscillator (RO) whose delay variations will reflect variations of a voltage delivered by the power supply. An exemplary embodiment using a DLL is shown on **Figure 3****.**

Such a sensor 10 may be permanently implemented in the electronic system when the electronic system is produced in factory. Alternatively, such a sensor 10 may be generated on request by configuring reprogrammable circuits of the electronic system such as ASIC or FPGA circuits.

Such a sensor 10 may be used solely for the purpose of an attack detection according to the invention. Nevertheless, in such a case, it might be the target of an attack disabling without impact on the behavior of the rest of the device. Therefore, such a sensor may preferably be used for performing other tasks. As an example, a PLL may be used for synchronizing a clock signal provided to a RAM memory of the electronic system. By doing so, any attack preventing a normal operation of the sensor would result in a faulty behavior of the electronic system and would therefore be detected.

The next paragraphs will described in more details the steps of a method for detecting an attack according to a first aspect of the invention, as depicted in **Figure 4****.**

In a first detection step S1, the attack detection system 7 detects an attack on the sensitive unit. Such an attack may for example be a fault injection attack or a focus ion beam attack.

In a second detection step S2, the attack detection system 7 performs an action depending on a result of the detection performed in the first step, said action inducing a leakage having an impact on the sensor 10 of the electronic system.

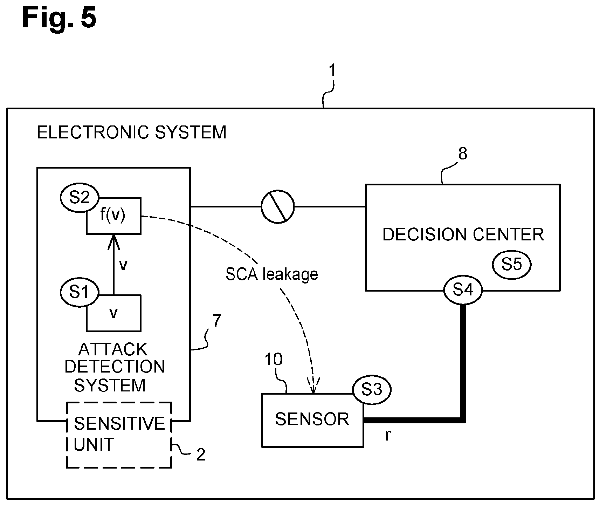

As an example, as shown on **Figure 5****,** in the first step S1 the attack detection system may collect an information *v* such as the value of an alarm; and in the second step S2, the attack detection may, when such an information is indicative of an attack, perform a computational process based on a function f and on the collected information. For example, the function f may be a cryptographic algorithm such as a lightweight low cost cryptosystem like PRESENT or SPONGENT, or a standard cryptographic algorithm such as AES, DES or RSA and the information *v* may be used as a part of an encryption key or as the message to be encrypted when the cryptographic algorithm is performed. Device specific information can also be part of this key to have a per-device specific leakage. Alternatively, such a computational process may be another kind of computation involving the information *v* such as the computation of a CRC, or a basic operation such as a multiplication.

In an exemplary embodiment, such a leakage induced by the action performed by the attack detection system, may be a variation in a voltage provided by the power supply 9 of the electronic system to said sensor 10.

In an alternative embodiment, such a leakage may be a clock perturbation generated by the action performed by the attack detection system, and such a perturbation may affect the behavior of the sensor 10 of the electronic system.

In a third detection step S3, the sensor 10 generates a signal r and the generation of the signal is perturbed by the leakage induced by the attack detection system.

In the embodiment where the leakage is a variation in the voltage provided by the power supply 9 to the sensor 10, the signal generation by the sensor may depend on said voltage variation induced by the attack detection system 7. For example, as shown on Figure 5, when the attack detection system generates a leakage by performing a computational process based on a function f and on a collected information, the generated signal may be representative of the power consumed by the attack detection system when performing said computational process. For example, in the case of a TDC, the TDC outputs a digital signal indicative of the propagation delay of an input signal in its delay line. This propagation delay varies depending on voltage variations induced by the power consumption of the attack detection system. Therefore, in this case, the digital signal generated by the TDC is perturbed by the power leakage induced by the attack detection system and is representative of the power consumed by the attack detection system.

In a fourth detection step S4, the decision center 8 accesses the signal generated by the sensor 10.

In a fifth detection step S5, the decision center 8 determines by a side channel analysis based on the accessed signal from the sensor 10 that the attack detection system 7 has detected an attack on the sensitive unit 2 of the electronic system.

For example, in case of a power leakage, the decision center can perform a power analysis based on traces extracted from the signal generated by a TDC.

Such a side channel analysis may enable the decision center 8 to retrieve the information v based on the signal r generated by the sensor 10. For example, in the case of a power leakage, the decision center may use a consumption model predicting the power ***model*[*f*(*v*)]** consumed by the attack detection system 7. Such a model has to reflect to electrical behavior of the chip. The usual ones the literature are the Hamming Weight, the Hamming Distance, the Identity... Even weighted consumption models might be applied where each bit of the previous Hamming weight or distance has not the same weight. These examples are not limitative and any model that would suit better the electrical behavior of the component might be used. In addition, the decision center may take into account noise components of the signal generated by the sensor, including an intrinsic deterministic noise of the device due to all the surrounding elements not involved in the computation and a Gaussian noise linked to the measurement. Alternatively, the decision center 8 may use correspondence tables or curves to retrieve the information ***v*** from the signal generated by the attack detection system 7. Such a correspondence may be deterministic or probabilistic. In the case where the action performed by the attack detection system is an encryption operation, the decision center may know the parameters, other than the information ***v*,** used for performing the encryption. Particularly, if the information ***v*** is used as an encryption key, the decision center may know golden values used as message encrypted by the encryption operation.

In a sixth detection step S6, the decision center 8 may perform a dedicated action when the decision center determined in the fifth detection step S5 that an attack has been detected by the attack detection system 7. Such an action may for example be a forced shutdown or restart of the electronic system, the record of an error code and transmission of this error code to a remote device, or destruction, at least partial, of the system, for example by blowing fuses.

Thus, such a method enables to establish a hidden communication channel between the attack detection system 7 and the decision center 8, which cannot be broken by simply cutting a wire between them. It enables to detect attacks and trigger appropriate countermeasures, while being protected against attacks on the communication link between the attack detection system and the countermeasure triggering system, without adding an extra attack detection system or protections against invasive attacks and therefore at a lower cost than existing solutions protected against such attacks.

According to a second aspect, this invention also relates to a computer program product directly loadable into the memory of at least one computer, comprising software code instructions for performing the steps of the method according to the first aspect described here above when said product is run on the computer.

According to a third aspect, this invention relates to the electronic system 1 described here above and comprising a sensitive unit 2, an attack detection system 7, a sensor 10 and a decision center 8 wherein:
- said attack detection system 7 is configured for detecting an attack on said sensitive unit 2,
- said attack detection system 7 is configured for performing an action depending on a result of said detection, said action inducing a leakage having an impact on said sensor 10;
- said sensor 10 is configured for generating a signal, said signal generation being perturbed by said leakage induced by the attack detection system 7,
- said decision center 8 is configured for accessing said signal generated by said sensor 10,
- said decision center 8 is configured for determining by a side channel analysis based on said accessed signal that said attack detection system 7 has detected an attack on said sensitive unit 2.

The electronic system 1 according to the third aspect may be configured for detecting an attack by performing the method according to the first aspect described here above.

Consequently, such method, electronic system and computer program product enable to detect attacks by establishing a hidden communication channel between the attack detection system and the decision center, which cannot be broken by simply cutting a wire between them, at a lower cost than existing solutions protected against such attacks.

## Claims

1. A method for detecting an attack on a sensitive unit (2) of an electronic system (1) comprising an attack detection system (7), a sensor (10) and a decision center (8), said method comprising:
- detecting (S1), by said attack detection system (7), an attack on said sensitive unit (2),
- performing (S2), by said attack detection system (7), an action depending on a result of said detection, said action inducing a leakage having an impact on said sensor (10);
- generating (S3), by said sensor (10), a signal, said signal generation being perturbed by said leakage induced by the attack detection system (7),
- accessing (S4), by said decision center (8), said signal generated by said sensor,
- determining (S5), by said decision center (8), by a side channel analysis based on said accessed signal that said attack detection system has detected an attack on said sensitive unit.

2. The method of claim 1, wherein:
- said electronic system (1) comprises a power supply (9) providing power to said attack detection system (7) and said sensor (10),
- said leakage is a variation in a voltage provided by said power supply to said sensor,
- said signal generation depends on said voltage variation induced by the attack detection system.

3. The method of claim 2, wherein:
- detecting an attack (S1) comprises: collecting an information (***v***),
- performing an action depending on a detection result (S2) comprises: performing a computational process based on a function (f) and on said collected information (***v***),
- generating a signal (S3) comprises: generating a signal ( ***r***) representative of the power consumed by the attack detection system when performing said computational process,
- determining that said attack detection system has detected an attack (S5) comprises: retrieving said information (***v***) based on said generated signal (***r***).

4. The method of claim 3, wherein the function (f) is a cryptographic algorithm and the information (***v***) is used as a part of a key of the cryptographic algorithm.

5. The method of any one of claims 1 to 4, wherein said information (***v***) is the value of an alarm.

6. The method of any one of claims 1 to 5 comprising performing, by said decision center (8), a dedicated action (S6) when said attack detection is determined by said decision center.

7. A computer program product directly loadable into the memory of at least one computer, comprising software code instructions for performing the steps of any one of claims 1 to 6 when said product is run on the computer.

8. An electronic system (1) comprising a sensitive unit (2), an attack detection system (7), a sensor (10) and a decision center (8) wherein:
- said attack detection system (7) is configured for detecting an attack on said sensitive unit (2),
- said attack detection system (7) is configured for performing an action depending on a result of said detection, said action inducing a leakage having an impact on said sensor (10);
- said sensor (10) is configured for generating a signal, said signal generation being perturbed by said leakage induced by the attack detection system (7),
- said decision center (8) is configured for accessing said signal generated by said sensor,
- said decision center (8) is configured for determining by a side channel analysis based on said accessed signal that said attack detection system has detected an attack on said sensitive unit.

9. The electronic system of claim 8 wherein said sensitive unit (2) comprises said attack detection system (7).

10. The electronic system of claim 8 or 9 configured for detecting an attack by performing the method according to any one of claims 2 to 6.

11. The electronic system (1) of any one of claims 8 to 10, wherein said sensor (10) comprises a delay locked loop (DLL) or a phase locked loop (PLL) or a time to digital converter (TDC) or a ring oscillator (RO).

12. The electronic system (1) of any one of claims 8 to 11, wherein said attack detection system (7) comprises a voltage glitch detector or a laser detector or an electromagnetic sensor or a temperature sensor.

13. The electronic system any one of claims 8 to 12, wherein the electronic system (1) is a System-on-Chip (SoC).

## Patentansprüche

1. Verfahren zum Detektieren eines Angriffs auf eine empfindliche Einheit (2) eines elektronischen Systems (1), umfassend ein Angriffsdetektionssystem (7), einen Sensor (10) und ein Entscheidungszentrum (8), das Verfahren umfassend:
- Detektieren (S1), durch das Angriffsdetektionssystem (7), eines Angriffs auf die empfindliche Einheit (2),
- Durchführen (S2), durch das Angriffsdetektionssystem (7), einer Aktion in Abhängigkeit von einem Ergebnis der Detektion, wobei die Aktion eine Leckage induziert, die sich auf den Sensor (10) auswirkt;
- Erzeugen (S3), durch den Sensor (10), eines Signals, wobei die Signalerzeugung durch die Leckage gestört wird, die durch das Angriffsdetektionssystem (7) induziert wird,
- Zugreifen (S4), durch das Entscheidungszentrum (8), auf das Signal, das durch den Sensor erzeugt wird,
- Bestimmen (S5), durch das Entscheidungszentrum (8), durch eine Seitenkanalanalyse basierend auf dem Signal, auf das zugegriffen wird, dass das Angriffsdetektionssystem einen Angriff auf die empfindliche Einheit detektiert hat.

2. Verfahren nach Anspruch 1, wobei:
- das elektronische System (1) eine Stromversorgung (9) umfasst, die Strom an das Angriffsdetektionssystem (7) und den Sensor (10) bereitstellt,
- die Leckage eine Variation in einer Spannung ist, die durch die Stromversorgung an den Sensor bereitgestellt wird,
- die Signalerzeugung von der Spannungsvariation abhängig ist, die durch das Angriffsdetektionssystem induziert wird.

3. Verfahren nach Anspruch 2, wobei:
- das Detektieren eines Angriffs (S1) umfasst: Sammeln von Informationen (v),
- das Durchführen einer Aktion in Abhängigkeit von einem Detektionsergebnis (S2) umfasst: Durchführen eines Rechenprozesses basierend auf einer Funktion (f) und auf den gesammelten Informationen (v),
- das Erzeugen eines Signals (S3) umfasst: Erzeugen eines Signals (***r***), das den Strom darstellt, der durch das Angriffsdetektionssystem verbraucht wird, wenn der Rechenprozess durchgeführt wird,
- das Bestimmen, dass das Angriffsdetektionssystem einen Angriff (S5) detektiert hat, umfasst: Abrufen der Informationen (***v***) basierend auf dem erzeugten Signal (***r***).

4. Verfahren nach Anspruch 3, wobei die Funktion (f) ein kryptographischer Algorithmus ist und die Informationen (***v***) als ein Teil eines Schlüssels des kryptographischen Algorithmus verwendet werden.

5. Verfahren nach einem der Ansprüche 1 bis 4, wobei die Informationen (***v***) der Wert eines Alarms sind.

6. Verfahren nach einem der Ansprüche 1 bis 5, umfassend das Durchführen, durch das Entscheidungszentrum (8), einer dedizierten Aktion (S6), wenn die Angriffsdetektion durch das Entscheidungszentrum bestimmt wird.

7. Computerprogrammprodukt, das direkt in den Speicher mindestens eines Computers ladbar ist, umfassend Softwarecodeanweisungen zum Durchführen der Schritte nach einem der Ansprüche 1 bis 6, wenn das Produkt auf dem Computer läuft.

8. Elektronisches System (1), umfassend eine empfindliche Einheit (2), ein Angriffsdetektionssystem (7), einen Sensor (10) und ein Entscheidungszentrum (8), wobei:
- das Angriffsdetektionssystem (7) zum Detektieren eines Angriffs auf die empfindliche Einheit (2) konfiguriert ist,
- das Angriffsdetektionssystem (7) zum Durchführen einer Aktion in Abhängigkeit von einem Ergebnis der Detektion konfiguriert ist, wobei die Aktion eine Leckage induziert, die sich auf den Sensor (10) auswirkt;
- der Sensor (10) zum Erzeugen eines Signals konfiguriert ist, wobei die Signalerzeugung durch die Leckage gestört wird, die durch das Angriffsdetektionssystem (7) induziert wird,
- das Entscheidungszentrum (8) zum Zugreifen auf das Signal konfiguriert ist, das durch den Sensor erzeugt wird,
- das Entscheidungszentrum (8) zum Bestimmen durch eine Seitenkanalanalyse basierend auf dem Signal, auf das zugegriffen wird, dass das Angriffsdetektionssystem einen Angriff auf die empfindliche Einheit detektiert hat, konfiguriert ist.

9. Elektronisches System nach Anspruch 8, wobei die empfindliche Einheit (2) das Angriffsdetektionssystem (7) umfasst.

10. Elektronisches System nach Anspruch 8 oder 9, das zum Detektieren eines Angriffs durch Durchführen des Verfahrens nach einem der Ansprüche 2 bis 6 konfiguriert ist.

11. Elektronisches System (1) nach einem der Ansprüche 8 bis 10, wobei der Sensor (10) eine Verzögerungsregelschleife (DLL) oder eine Phasenregelschleife (PLL) oder einen Zeit-Digital-Wandler (TDC) oder einen Ringoszillator (RO) umfasst.

12. Elektronisches System (1) nach einem der Ansprüche 8 bis 11, wobei das Angriffsdetektionssystem (7) einen Spannungsstörungsdetektor oder einen Laserdetektor oder einen elektromagnetischen Sensor oder einen Temperatursensor umfasst.

13. Elektronisches System nach einem der Ansprüche 8 bis 12, wobei das elektronische System (1) ein System-on-Chip (SoC) ist.

## Revendications

1. Procédé de détection d'une attaque sur une unité sensible (2) d'un système électronique (1) comprenant un système de détection d'attaque (7), un capteur (10) et un centre de décision (8), ledit procédé comprenant :
- la détection (S1), par ledit système de détection d'attaque (7), d'une attaque sur ladite unité sensible (2),
- le fait d'effectuer (S2), par ledit système de détection d'attaque (7), une action dépendant d'un résultat de ladite détection, ladite action induisant une fuite ayant un impact sur ledit capteur (10) ;
- la génération (S3), par ledit capteur (10), d'un signal, ladite génération de signal étant perturbée par ladite fuite induite par le système de détection d'attaque (7),
- l'accès (S4), par ledit centre de décision (8), dudit signal généré par ledit capteur,
- la détermination (S5), par ledit centre de décision (8), par une analyse de canal auxiliaire sur la base dudit signal accédé, que ledit système de détection d'attaque a détecté une attaque sur ladite unité sensible.

2. Procédé selon la revendication 1, dans lequel :
- ledit système électronique (1) comprend une alimentation électrique (9) fournissant de l'énergie audit système de détection d'attaque (7) et audit capteur (10),
- ladite fuite est une variation d'une tension fournie par ladite alimentation électrique audit capteur,
- ladite génération de signal dépend de ladite variation de tension induite par le système de détection d'attaque.

3. Procédé selon la revendication 2, dans lequel :
- la détection d'une attaque (S1) comprend : la collection d'une information (***v***),
- le fait d'effectuer une action en fonction d'un résultat de détection (S2) comprend : le fait d'effectuer un processus de calcul sur la base d'une fonction (f) et desdites informations collectées (***v***),
- la génération d'un signal (S3) comprend : la génération d'un signal (***r***) représentatif de l'énergie consommée par le système de détection d'attaque lors du fait d'effectuer ledit processus de calcul,
- la détermination que ledit système de détection d'attaque a détecté une attaque (S5) comprend : la récupération desdites informations (***v***) sur la base dudit signal généré (***r***).

4. Procédé selon la revendication 3, dans lequel la fonction (f) est un algorithme cryptographique et les informations *(**v**)* sont utilisées en tant que partie d'une clé de l'algorithme cryptographique.

5. Procédé selon l'une quelconque des revendications 1 à 4, dans lequel lesdites informations (***v***) sont la valeur d'une alarme.

6. Procédé selon l'une quelconque des revendications 1 à 5, comprenant le fait d'effectuer, par ledit centre de décision (8), une action dédiée (S6) lorsque ladite détection d'attaque est déterminée par ledit centre de décision.

7. Produit programme informatique pouvant être chargé directement dans la mémoire d'au moins un ordinateur, comprenant des instructions de code logiciel permettant d'effectuer les étapes selon l'une quelconque des revendications 1 à 6 lorsque ledit produit est exécuté sur l'ordinateur.

8. Système électronique (1) comprenant une unité sensible (2), un système de détection d'attaque (7), un capteur (10) et un centre de décision (8), dans lequel :
- ledit système de détection d'attaque (7) est configuré pour détecter une attaque sur ladite unité sensible (2),
- ledit système de détection d'attaque (7) est configuré pour effectuer une action en fonction d'un résultat de ladite détection, ladite action induisant une fuite ayant un impact sur ledit capteur (10) ;
- ledit capteur (10) est configuré pour générer un signal, ladite génération de signal étant perturbée par ladite fuite induite par le système de détection d'attaque (7),
- ledit centre de décision (8) est configuré pour accéder audit signal généré par ledit capteur,
- ledit centre de décision (8) est configuré pour déterminer, par une analyse de canal auxiliaire sur la base dudit signal accédé, que ledit système de détection d'attaque a détecté une attaque sur ladite unité sensible.

9. Système électronique selon la revendication 8, dans lequel ladite unité sensible (2) comprend ledit système de détection d'attaque (7).

10. Système électronique selon la revendication 8 ou 9, configuré pour détecter une attaque en effectuant le procédé selon l'une quelconque des revendications 2 à 6.

11. Système électronique (1) selon l'une quelconque des revendications 8 à 10, dans lequel ledit capteur (10) comprend une boucle à verrouillage de retard (DLL) ou une boucle à verrouillage de phase (PLL) ou un convertisseur temps-numérique (PMH) ou un oscillateur annulaire (RO).

12. Système électronique (1) selon l'une quelconque des revendications 8 à 11, dans lequel ledit système de détection d'attaque (7) comprend un détecteur de problème de tension ou un détecteur laser ou un capteur électromagnétique ou un capteur de température.

13. Système électronique selon l'une quelconque des revendications 8 à 12, dans lequel le système électronique (1) est un système sur puce (SoC).
